# EUROPEAN PATENT APPLICATION

(11) **EP 4 678 665 A1**
(43) Date of publication of application: **14.01.2026**
(21) Application number: 24187167.2
(22) Date of filing: 08.07.2024
(51) Int. Cl.: C08F 8/02, C08F 8/34, C08F 226/06, C08L 39/08, G01N 27/327

(54) **A POLYMER, PREPARATION METHOD THEREOF, POROUS MEMBRANE CONTAINING THE POLYMER AND APPLICATION OF THE MEMBRANE**

(71) Applicant: Syai UK Ltd, Cambridge CB2 8DL (GB)
(72) Inventor: Wang, Zhihua, CAMBRIDGE, CB2 8DL (GB)
(74) Representative: Nederlandsch Octrooibureau

(57) **Abstract**

The present application provides a polymer, a preparation method thereof, a porous membrane containing the polymer and application of the membrane. The polymer comprises three or more structural units, wherein the polymer comprises at least one of the following structural units: structural units of compounds shown in general formula I; structural units of styrene compounds; structural units of (methyl) acrylic compounds; the polymer can optionally comprise structures shown in formula II, where 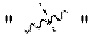 represents linker bonds with Ns on a pyridine ring or an imidazole ring. The Ns on a vinyl monomer substituted with heterocycles as shown in formula I can react with halides or active esters to obtain porous polymeric membrane materials of amphoteric compounds or cationic compounds.

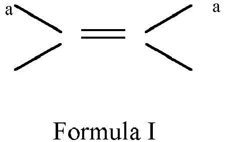

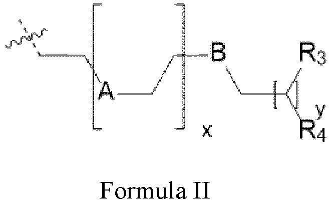

## Description

### Technical Field

The present application belongs to the technical field of the biosensor, and particularly relates to a polymer, a preparation method thereof, a porous membrane containing the polymer and application of the membrane.

### Background

A biosensor is an instrument that is sensitive to biological substances and converts their concentration into electric signals for detection. It is an analytical tool or system composed of immobilized biosensitive materials as recognition elements (including enzymes, antibodies, antigens, microorganisms, cells, tissues, nucleic acids, and other bioactive substances), appropriate physiochemical transducers (such as oxygen electrodes, photosensitive tubes, field-effect transistors, piezoelectric crystals), and signal amplification devices. Biosensors have the functions of receptors and converters, and they can usually be used to quickly detect certain specific tested chemicals in the human body, such as glucose, uric acid, lactic acid, blood ketones, and a series of other compounds. Current analysis biosensors typically use two or three electrodes, including at least one measuring or working electrode and one reference electrode. In a dual-electrode system, the reference electrode also acts as a counter electrode. In a three-electrode system, the third electrode is a counter electrode. The measuring or working electrode is composed of anti-corrosion carbon or metal conductors and connected to the reference electrode through a circuit (such as a potentiostat).

S.J. Updyke et al. developed the first biosensor glucose sensor in 1967. The glucose oxidase was cured in a polyacrylamide colloidal film, and then the colloidal film is fixed on the tip of the diaphragm oxygen electrode to form a glucose sensor. Other sensors for detecting their equivalents can be made when other enzymes or microorganisms are used to cure the film.

In enzyme based biosensors, the polymeric semipermeable membrane is an important component of biosensors. Hydrophilic polymeric membrane materials can serve as both immobilizing enzymes and mediators in electrochemical reaction layers, as well as controlling the diffusion rate of the measured substance from the external environment to the sensor electrode surface.

In implantable current sensors, polymeric semipermeable membranes are usually beneficial or necessary for regulating or limiting the direction of the test material towards the sensing layer. In sensors without membranes, the flux of the measured substance to the sensing layer increases linearly with the concentration of the measured substance. When all the measured substances reaching the sensing layer are consumed, the measured output signal is linearly proportional to the flux of the measured substance, and thus linearly proportional to the concentration of the measured substance. However, when the consumption of the measured substance is limited by the dynamics of chemical or electrochemical activities in the sensing layer, the measured output signal is no longer controlled by the flux of the measured substance and is no longer linearly proportional to the flux or concentration of the measured substance. In this case, only a small portion of the measured substance reaching the sensing layer is consumed before the sensor saturates, so the measurement signal stops increasing or only slightly increases with the concentration of the measured substance. On the other hand, in sensors provided with diffusion limiting membranes, the membrane reduces the flux of the measured substance to the sensing layer, preventing the sensor from becoming saturated and allowing for effective operation over a wider concentration range.

In implantable current sensors, the polymeric semipermeable membrane needs to be in direct contact with the human body and soaked in physiological environments for a long time. This requires the membrane material to have good biocompatibility to prevent rejection reactions that are unacceptable to the organism; at the same time, implantable biosensors may generate friction with surrounding tissues such as muscles during use. If the adhesion of hydrophilic polymer semi permeable membranes on the surface of hydrophobic biosensors is not sufficient to overcome this friction, the stability of the sensors will be greatly reduced, leading to potential problems such as membrane material peeling.

At present, many researches have been conducted on the outer membranes of biosensors, mainly focusing on how to obtain membrane materials with excellent performance in various aspects and their application scenarios. Many researchers have mainly focused on using single monomer polymers or diblock polymers for subsequent research applications, but have not yet found the use of polymers with three or more blocks in membrane materials.

### Summary of the Invention

The purpose of the present application is to provide a polymer, a preparation method thereof, a porous polymeric membrane material containing the polymer and a preparation method thereof, as well as application of the porous polymeric membrane material on outer membranes of biosensors. The polymer has good physical properties and good biocompatibility, suitable for biosensors.

The technical solution of the present application is as follows:
A polymer, characterized in that the polymer comprises three or more structural units:
wherein the polymer comprises at least one of structural units of the compounds shown in general formula I: 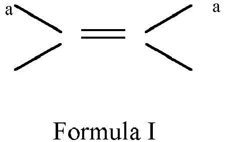
in formula I, Rₐ, R_{b}, and Rₑ are the same or different, independently selected from H, C₁₋₆ alkyl, sulfonic substituents, ether substituents, or ester substituents;
R_{d} is a substituted or unsubstituted imidazole ring or pyridine ring; the substituted or unsubstituted refers to the presence or absence of a substituent on a carbon atom of the imidazole ring or pyridine ring, and the substituent is selected from C₁₋₆ alkyl, C₁₋₆ alkoxy, sulfo, sulfamino, amino, methylamino, dimethylamino, ethylamino, propylamino or butylamino;
structural units of styrene compounds;;
and, (methyl) acrylic compounds;
the polymer can optionally comprise structures shown in formula II: 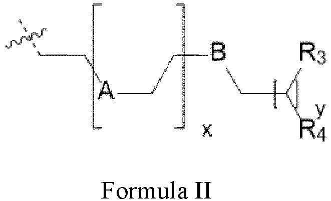
where, A is O, N or C; B is O, N or C;
R₃ and R₄ are the same or different, independently selected from H, CH₃, OMe, SC₃²⁻, CO₂²⁻, PO₃²⁻, or NR₅R₆; R₅ and R₆ are the same or different, independently selected from H, or C₁₋₆ alkyl;
x is an integer of 0-10; y is an integer of 0-10;
" 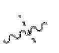 " represents linker bonds with Ns on a pyridine ring or an imidazole ring.

According to the embodiment of the present application, preferably, the polymer according to claim 1, characterized in that, the monomer containing the structural units shown in formula I is selected from at least one of 4-vinylpyridine, 2-vinylpyridine and 3-vinylpyridine, 1-vinylimidazole, 2-vinylimidazole and 4-vinylimidazole.

According to the embodiment of the present application, preferably, the styrene compounds are at least one of styrene, 2-methylstyrene, 3-methylstyrene, 4-methylstyrene, o-methoxystyrene, m-methoxystyrene, p-methoxystyrene, and m-sulfonic styrene.

According to the embodiment of the present application, preferably, the (methyl) acrylic compounds are at least one of (methyl) acrylate, acrylic acid, acrylamide, propanol, ethoxyethyl methacrylate, 2- methacryroyloxyethylphosphoryl choline, and methacrylic hydroxyalkyl ester. The (methyl) acrylate can be selected from C₁₋₆ alkyl (methyl) acrylate, such as methyl acrylate, methyl methacrylate, ethyl acrylate, ethyl methacrylate, n-propyl acrylate, n-propyl methacrylate, isopropyl acrylate, isopropyl methacrylate, n-butyl acrylate, n-butyl methacrylate, isobutyl acrylate, isobutyl methacrylate, n-amyl acrylate, n-amyl methacrylate, isoamyl acrylate, isoamyl methacrylate, n-hexyl methacrylate. The methacrylic hydroxyalkyl ester can be selected from C₁₋₆ hydroxyalkyl (methyl) acrylate, hydroxyethyl acrylate, hydroxyethyl methylacrylate, hydroxypropyl acrylate and hydroxypropyl methacrylate, etc.

According to the embodiment of the present application, the sulfonic substituents are one of methyl sulfo, ethyl sulfo, propyl sulfo, isopropyl sulfo, and butyl sulfo.

According to the embodiment of the present application, the ether substituents are one of methoxyether, ethoxyether, diphenyl oxide, benzyl oxide, methyl sulfide, or ethyl sulfide.

According to the embodiment of the present application, the ester substituents are one of C₁₋₆ alkyl esters, such as methyl methoxy, methyl ethoxy, n-propoxy methyl, methyl isopropoxy.

According to the embodiment of the present application, the polymer is one of the following structural formulae: 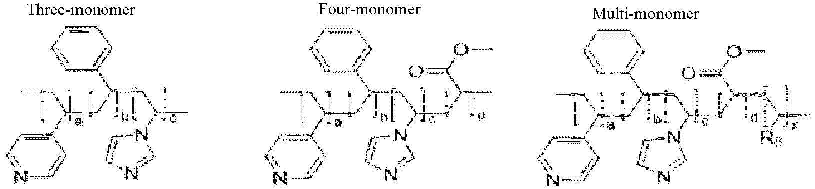 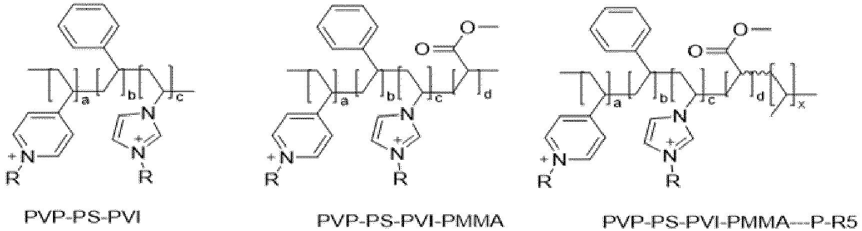
where, R is the structure shown in formula II; x represents the degree of polymerization, from 100-10,000;
a, b, c and d are integers of 1-1,000.

The polymer of the present application can be random copolymer, block copolymer, or alternating copolymer.

The weight-average molecular weight of the polymer in the present application can be 300,000-800,000, preferably 350,000-700,000. The number-average molecular weight of the polymer in the present application can be 150,000-400,000, preferably 200,000 to 400,000. The molecular weight distribution of the polymer in the present application can be 1.5-2.5.

The present application also provides a preparation method of the above-mentioned polymer, and the method can optionally comprise:
Step (1): mixing at least three monomers above to react with an initiator in a solvent, in order to obtain the polymer.

According to the embodiment of the present application, the method can further comprise step (2): enabling the polymer obtain in step (1) to react with the compound of the structure shown in formula III, in order to obtain a polymer containing the group shown in formula II; 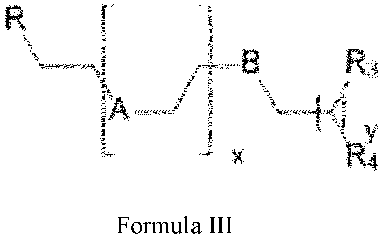 where, A is O, N or C; B is O, N or C;
R₃ and R₄ are the same or different, independently selected from H, CH₃, OMe, SC₃²⁻, CO₂²⁻, PO₃²⁻, or NR₅R₆; Rs and R₆ are the same or different, independently selected from H, or C₁-C₆ alkyl;
x is an integer of 0-10; y is an integer of 0-10;
R is a detachable group, such as Cl, Br, I, OMs or OTs.

According to the embodiment of the present application, the compound of the structure shown in formula III is one of 2-(2-methoxyethoxy) halides or sulfonates or haloalkanes or halogenated carbonates, or halogenated phosphates, for example, selected from 1,3-propane sultone, diethylene glycol mono-p-toluenesulfonate or 1-bromo-2-(2-methoxyethoxy) ethane, 1-bromo-2-(2-methoxyethoxy) methyl acetate or 1-chloro-2-(2-methoxyethoxy) trimethyl phosphate.

According to the embodiment of the present application, the initiator is at least one of azodiisobutyronitrile, benzoyl peroxide, or potassium persulfide.

According to the embodiment of the present application, the solvent is at least one of ethanol, isopropanol, toluene, ethyl acetate, or N,N-dimethylformamide and water. The content of the solvent is not particularly defined, in order to ensure that all raw materials can be mixed evenly.

According to the embodiment of the present application, the mass of the initiator is 0.1-1% of the total mass of at least three monomers.

According to the embodiment of the present application, in step (1), the reaction temperature is 35-110°C; the reaction time is 6-48h, preferably 6-24h.

According to the embodiment of the present application, in step (2), the reaction temperature is 35-110°C; the reaction time is 6-48h, preferably 6-24h.

According to the embodiment of the present application, in step (2), the mass ratio of the polymer to the compound of the structure shown in formula III in step (1) is 5-100:1.

According to the embodiment of the present application, the method also comprises a posttreatment step, such as dissolving, filtering, and drying the prepared product.

As an exemplary embodiment of the present application, the preparation method of the polymer specifically comprises:
mixing at least three monomers mentioned above with a solvent, then adding an initiator based on a mass ratio of 0.1-1% of the at least three monomers, replacing them with nitrogen under reduced pressure three times, and raising the temperature to 35-110 °C, stirring mechanically and reacting; after the reaction is completed, cooling to room temperature, diluting with 5-30 times ethanol, and adding the resulting solution dropwise to methyl tert-butyl ether to precipitate the solid, filtering the solid with a 200-mesh filter cloth, collecting the solid, and drying by air blowing at 50 °C for 48 hours; dissolving the collected dry material in ethanol again, adding it dropwise to pure water, filtering it, and then drying it by air blowing at 50 °C for 48 hours, crushing it with a crusher and filtering it with a 200-mesh sieve, vacuum drying the resulting powder at 50 °C for 48 hours before collecting the polymer.

The present application further provides a porous polymeric membrane material, and the porous polymeric membrane material contains the above-mentioned polymer.

According to the embodiment of the present application, the polymeric membrane further includes a low molecular weight polymer.

According to the embodiment of the present application, the low molecular weight polymer is selected from polyoxypropylene-polyoxyethylene block copolymer (Pluronic), carbomer (carboxy vinyl polymer), polyether amine, polydimethylsiloxane (PDMS), polyethylene glycol diglycidyl ether, polyacrylate, hydroxypropyl methylcellulose, polyvinone, Dowsil 57 non-reactive ethylene glycol copolymer surfactant and Dowsil 205SL 50% silicone polyether copolymer.

According to the embodiment of the present application, the mass of the low molecular weight polymer is 0.005-20wt% of the porous polymeric membrane material.

Preferably, the specific information of the low molecular weight polymer is shown in the table below:

| Trade name | Chemical name | Range of number-average molecular weight | Amount |
|---|---|---|---|
| Pluronic (Poloxamer) | Polyoxypropylene-polyoxyethylene block copolymer | 1000-7000 | 0.1-20wt% |
| Carbomer | Carboxy vinyl polymer | 500-5000 | 0.1-20wt% |
| Polyether amine | Polyether amine | 200-5000 | 0.1-20wt% |
| PDMS | Polydimethylsiloxane | 17000-120000 | 0.1-20wt% |
| PEGDGE | Polyethylene glycol diglycidyl ether | 200~2000 | 0.1-20wt% |
| Polyacrylate | Polyacrylate | 6000-20000 | 0.1-20wt% |
| HPMC | Hydroxypropyl methylcellulose | 86000 | 0.1-20wt% |
| Povidone | Povidone | 2500-300000 | 0.1-20wt% |
| Dowsil 57 non-reactive ethylene glycol copolymer surfactant | Dowsil 57 non-reactive ethylene glycol copolymer surfactant | 1000-15W | 0.005-0.03wt% |
| Dowsil 205SL 50% silicone polyether copolymer | Dowsil 205SL 50% silicone polyether copolymer | 1000-15W | 0.005-0.03wt% |

According to the embodiment of the present application, the low molecular weight polymer is preferably the mixture of polyether amine and polyethylene glycol diglycidyl ether, and the mass ratio of the two is 4-10: 1.

The present application also provides a preparation method of the above-mentioned porous polymeric membrane material, wherein the method comprises:
Mixing the polymer and a low molecular weight polymer to react in a solvent, in order to obtain the porous polymeric membrane material.

According to the embodiment of the present application, the reaction the reaction temperature is 60°C-120°C; the reaction time is 2-24h.

According to the embodiment of the present application, the method specifically comprises: mixing a low molecular weight polymer with a mixed solution of HEPES aqueous solution and ethanol, and then mixing the obtained product with the above polymer to prepare a porous polymeric membrane material.

In the present application, the content of the solvent is not particularly defined, in order to solve all reaction raw materials.

According to the embodiment of the present application, the method also comprises a posttreatment step, such as washing, filtering, and drying the prepared product.

As an exemplary embodiment of the present application, the preparation method of the porous polymeric membrane material specifically comprises:
(S 1) At room temperature, the polymer was stirred and dissolved using N,N-dimethylformamide. After dissolution, 1,3-propane sultone was added, and the reaction was heated to 60 °C -120 °C for 12 hours. After the reaction, ethanol was added for dilution. The resulting solution was dropped into purified water to precipitate a solid, filtered, and vacuum dried to obtain the zwitterionic outer membrane material of the polymer, which is the porous polymeric membrane material.

As an exemplary embodiment of the present application, the preparation method of the porous polymeric membrane material specifically comprises:
(S1) At room temperature, the polymer is stirred and dissolved with N,N-dimethylformamide. After dissolution, 2- (2-methoxyethoxy) halides or sulfonates, haloalkanes, halogenated carbonates, or halogenated phosphates were added. The temperature was raised to 60 °C -100 °C and the reaction is carried out for 12 hours. After the reaction was completed, ethanol was added for dilution. The resulting solution was added dropwise to methyl tert-butyl ether, filtered, and vacuum dried to obtain the outer membrane material of the cationic product, which is the porous polymeric membrane material.

As an exemplary embodiment of the present application, the preparation method of the porous polymeric membrane material specifically comprises:
(S2) The low molecular weight polymer was added to a mixed solution of 4-hydroxyethylpiperazine ethane sulfonic acid aqueous solution (HEPES) and ethanol (the concentration of the low molecular weight polymer in the mixture is 10-30M/V%), reacted at 50 °C for 72 hours, and cooled to room temperature after reaction; the obtained solution was added to the ethanol solution of the polymer at room temperature, reacted at 55 °C for 48 hours, cooled to room temperature, diluted with ethanol, dropped into water to precipitate a solid, filtered with filter cloth to collect the solid, and dried by air blowing for 48 hours; the obtained solid was crushed with a crusher, and filtered with a 200-mesh sieve; the obtained powder was dried under vacuum at 50 °C for 48 hours before the product was collected, which is the porous polymeric membrane material.

The present application further provides a biosensor, comprising a conductive matrix and a sensing membrane coated on a surface of the conductive matrix, wherein the sensing membrane internally comprises the porous polymeric membrane material and a responsive enzyme.

According to the embodiment of the present application, the responsive enzyme includes any of glucose oxidase, lactate oxidase, L-glutamate oxidase or xanthine oxidase.

According to the embodiment of the present application, the step of providing the sensing membrane on the surface of the conductive matrix comprises:
preparing a coating reagent, which includes at least the responsive enzyme, an electron transfer agent, the porous polymeric membrane material, and the crosslinker; and,
coating the coating reagent onto the surface of the conductive matrix and curing the coating reagent.

Preferably, the curing temperature is 20-60°C.

According to the embodiment of the present application, the crosslinker includes but is not limited to PEGDGE, glutaraldehyde or carbodiimide.

According to the embodiment of the present application, the electron transfer agent can be a transition metal complex, quinone or other compounds with redox properties, such as selected from osmium complexes.

According to the embodiment of the present application, the sensing membrane further includes an enzyme stabilizer, such as human serum albumin, catalase, or trehalose.

According to the embodiment of the present application, the coating reagent further includes a low molecular weight polymer.

According to the embodiment of the present application, in the coating reagent, the mass of the low molecular weight polymer is 0.005-20wt% of the porous polymeric membrane material.

According to the embodiment of the present application, the coating reagent further includes small molecule additives, which are selected from plasticizers or anti-glycolysis agents;

The plasticizer is selected from triethyl citrate (with a weight-average molecular weight of 276) or tributyl acetocitrate (with a weight-average molecular weight of 402);

The anti-glycolysis agent is selected from mannitol (with a weight-average molecular weight of 182) or DL-glyceraldehyde-sodium fluoride.

According to the embodiment of the present application, the mass of the mall molecule additive is 0.1-20wt% of the porous polymeric membrane material.

According to the embodiment of the present application, the shape of the coating reagent coated on the surface of the conductive matrix can be straight, dashed, single point, multiple point, or planar.

The present application further provides the above biosensor, including but not limited to application in detection of glucose, lactic acid, blood ketone, uric acid and cholesterol.

### The beneficial effects of the present application are as follows:

The porous polymeric membrane material of the present application has hydrophilic and hydrophobic structures. When applied to biosensors, the polymeric membrane formed by the combined action of the hydrophilic and hydrophobic structures has a complex network structure, which makes the polymeric membrane have good adhesion and tensile performance on the surface of the biosensor. Moreover, the large-aperture porous structure can control the diffusion of appropriate concentrations of the tested substance into the sensing layer of the biosensor to meet the detection needs.

The nucleophilicity of Ns on a vinyl monomer substituted with heterocycles as shown in formula I of the present application can react with halides or active esters to obtain porous polymeric membrane materials of amphoteric compounds or cationic compounds.

The biosensor of the present application can detect chemical substances in the physiological environment of the body. The range of the sensing membrane used includes at least the active area of the working electrode, which can effectively limit the flux of analytes, expand the linear response range of the sensor, and have good biocompatibility. The active area can be configured into different shapes through sedimentation, including but not limited to straight, dashed, square, single point, multi-point or planar shapes, with a total area of approximately 0.05-0.5mm².

### Brief Description of the Drawings

FIG. 1 shows the cross-sectional SEM diagram of the coating material formed in Application Example 1.
FIG. 2 shows the time-current curve of the biosensor in Application Example 1.
FIG. 3 shows the linear relationship between the current value and glucose concentration in Application Example 1.
FIG. 4 shows the cross-sectional SEM diagram of the coating material formed in Application Example 2.
FIG. 5 shows the time-current curve of the biosensor in Application Example 2.
FIG. 6 shows the linear relationship between the current value of the biosensor and glucose concentration in Application Example 2.
FIG. 7 shows the current response values of the biosensor in Application Example 3 at different lactic acid concentrations.
FIG. 8 shows the current response values of the biosensor in Application Example 4 at different lactic acid concentrations.
FIG. 9 shows the cross-sectional SEM diagram of the coating material formed in Comparative Application Example 1.
FIG. 10 shows the time-current curve of the biosensor in Comparative Application Example 1.
FIG. 11 shows the linear relationship between the current value and glucose concentration in Comparative Application Example 1.

### Detailed Description of the Preferred Embodiments

The technical solution of the present application will be further described in detail with reference to specific embodiments. It should be understood that the following embodiments are only illustrative and explanatory of the present application, and should not be interpreted as limiting the scope of protection of the present application. All technologies implemented based on the above content of the present application are covered within the scope of protection intended by the present application.

Unless otherwise specified, the raw materials and reagents used in the following embodiments are commercially available or can be prepared by known methods.

### Embodiment 1

Add 50ml of N,N-dimethylformamide to a 500ml three-necked flask, followed by the addition of 4-vinylpyridine (30g), 1-vinylimidazole (15g), and styrene (5g), then azodiisobutyronitrile (200mg); after stirring and mixing evenly, perform nitrogen replacement three times to maintain a positive nitrogen pressure in the system; heat up to 65 °C and mechanically stir for 20 hours. After the reaction is complete, dissolve in 200ml of ethanol and add hydroquinone (200mg). After sufficient dissolution, add the reaction solution dropwise to 5L of methyl tert-butyl ether to precipitate the solid, filter with a 200-mesh filter cloth, collect the solid, and dry by air blowing at 50 °C for 48 hours. Dissolve the collected dry material again in ethanol (200mL) and add it dropwise to 4L of pure water to precipitate the solid. Filter it, and then dry it by air blowing at 50 °C for 48 hours. Crush it with a crusher and filter it with a 200-mesh sieve. Vacuum dry the obtained powder at 50 °C for 48 hours, and the collected product is PVP-PS-PVI (45g, with a yield of 90%).
MW: 370436; Mn: 211709; PDI: 1.75

### Embodiment 2

Add 60ml of N,N-dimethylformamide to a 250ml flask, add PVP-PS-PVI (10g) from Embodiment 1, stir at room temperature for dissolution, add 1,3-propane sultone (1.5g) after dissolution, heat up to 60 °C and react for 12 hours. After the reaction is completed, add 35ml of ethanol for dilution, followed by the addition of the obtained solution dropwise to 6L of purified water, filter and vacuum dry to obtain the outer membrane material (10g) of the white product PVP-PS-PVI's zwitterionic product, which is the porous polymeric membrane material.

### Embodiment 3

Add 60ml of N,N-dimethylformamide to a 250ml flask, add PVP-PS-PVI (10g) from Embodiment 1, stir at room temperature for dissolution, add diethylene glycol mono-p-toluenesulfonate (1g) after dissolution, heat up to 90 °C and react for 12 hours. After the reaction is completed, add 150ml of ethanol for dilution, followed by the addition of the obtained solution dropwise to 3L of methyl tert-butyl ether, filter and vacuum dry to obtain the outer membrane material (10g) of the white product PVP-PS-PVI's cationic product.

### Embodiment 4

Add 60ml of N,N-dimethylformamide to a 250ml flask, add PVP-PS-PVI (5g) from Embodiment 2, stir at room temperature for dissolution, add 1-bromo-2-(2-methoxyethoxy) ethane (0.6g) after dissolution, heat up to 90 °C and react for 12 hours. After the reaction is completed, add 25ml of ethanol for dilution, followed by the addition of the obtained solution dropwise to 500mL of methyl tert-butyl ether, filter and vacuum dry to obtain the outer membrane material (5.2g) of the white product PVP-PS-PVI's zwitterionic cationic product.

### Embodiment 5

Add 50ml of N,N-dimethylformamide to a 500ml three-necked flask, followed by the addition of 4-vinylpyridine (70g), 1-vinylimidazole (10g), styrene (10g), and methyl methacrylate (10g), then azodiisobutyronitrile (100mg); after stirring and mixing evenly, perform nitrogen replacement three times to maintain a positive nitrogen pressure in the system; heat up to 75 °C and mechanically stir for 20 hours. After the reaction is complete, dissolve in 400ml of ethanol and add hydroquinone (200mg). After sufficient dissolution, add the reaction solution dropwise to 7.5L of methyl tert-butyl ether to precipitate the solid, filter with a 200-mesh filter cloth, collect the solid, and dry by air blowing at 50 °C for 48 hours. Dissolve the collected dry material again in ethanol (400mL) and add it dropwise to 6L of pure water to precipitate the solid. Filter it, and then dry it by air blowing at 50 °C for 48 hours. Crush it with a crusher and filter it with a 200-mesh sieve. Vacuum dry the obtained powder at 50 °C for 48 hours, and the collected product is PVP-PS-PVI-PMMA (80g, with a yield of 90%).
MW: 589779; Mn: 277586; PDI: 2.12

### Embodiment 6

Add 60ml of N,N-dimethylformamide to a 250ml flask, add PVP-PS-PVI-PMMA (30g) from Embodiment 5, stir at room temperature for dissolution, add 1,3-propane sultone (3g) after dissolution, heat up to 60 °C and react for 12 hours. After the reaction is completed, add 270ml of ethanol for dilution, followed by the addition of the obtained solution dropwise to 10L of purified water, filter and vacuum dry to obtain the outer membrane material (30g) of the white product PVP-PS-PVI-PMMA's zwitterionic product.

### Embodiment 7

Add polyether amine (4.4g) and polyethylene glycol diglycidyl ether (1.1g) to a mixed solution of 0.5% HEPES aqueous solution (10ml) and ethanol (40ml), react at 50 °C for 72 hours, then cool to room temperature, at room temperature of 60 ° C, add the obtained solution to the ethanol (60ml) solution of the PVP-PS-PVI-PMMA's zwitterionic outer membrane material (30g) in Embodiment 6, after 48 hours of reaction at 55 °C, cool to room temperature, dilute with ethanol (200ml), add dropwise to 3L of water, precipitate a solid, filter with a filter cloth, collect the solid, and dry by air blowing for 48 hours, crush the obtained solid by a crusher, filter through a 200-mesh sieve, and vacuum dry the obtained powder at 50 °C for 48 hours before being collected as a PVP-PS-PVI-PMMA polymer's outer membrane material (30g).

### Embodiment 8

The difference between Embodiment 8 and Embodiment 2 is that 1.5g of 1,3-propane sultone is replaced with 2.6g of 1-bromo-2-(2-methoxyethoxy) methyl acetate.

### Embodiment 9

The difference between Embodiment 9 and Embodiment 2 is that 1.5g of 1,3-propane sultone is replaced with 2.5g of 1-chloro-2-(2-methoxyethoxy) methyl phosphate.

### Embodiment 10

Add 150g of polyethylene glycol (PEG400), 1,000mL of dichloromethane, and 59.6g of p-toluenesulfonyl chloride sequentially in a 2L three-necked flask, cooling to 0 °C in an ice bath, followed by the addition of 31.6g of triethylamine dropwise, and react overnight. Dilute with 6L of ethyl acetate, wash three times with 1M HCl, wash one time with saturated salt water, dry the organic phase anhydrous sodium sulfate, concentrate, and crystallize the concentrate with petroleum ether and ethyl acetate to obtain 72g of white solid product, which is the diethylene glycol mono-p-toluenesulfonate.

### Biosensor

### Application Example 1

The biosensor is used to detect glucose in the human body at low potential. The biosensor has an active glucose oxidase.

A biosensor, with coating materials prepared using the materials and proportions listed in Tables 1, 2, and 3. The specific method is:
At room temperature, add the components in Table 2 to 4-hydroxyethylpiperazine ethane sulfonic acid aqueous solution (HEPES) and ethanol solution (with a volume ratio of 20:80), stir and dissolve. After dissolution, continue to add the low molecular weight polymer PDMS and crosslinker PEGDGE2000 in Table 2. After ultrasonic dissolution, obtain coating reagent A for the outer membrane solution.

At room temperature, add the components in Table 2 to 4-hydroxyethylpiperazine ethane sulfonic acid aqueous solution and ethanol solution (with a volume ratio of 20:80), stir and dissolve. After dissolution, continue to add the low molecular weight polymer PDMS and crosslinker PEGDGE2000 in Table 3. After ultrasonic dissolution, obtain coating reagent B for the outer membrane solution.

Apply the responsive enzyme and mediator coating reagents configured according to the formula in Table 1 to the surface of the biosensor working electrode by depositing 8 points (approximately 0.02mm² per point). After the active area is cured, the coating reagent of the outer membrane solution mentioned above is impregnated multiple times to coat the active area on the biosensor. The coating method is as follows: the first step is to complete two impregnation coatings according to the coating reagent A of the outer membrane solution in Table 2, and cure at 25 °C for 30 minutes; the second step is to complete four impregnation coatings according to the coating reagent B of the outer membrane solution in Table 3, cure at 25 °C for 24 hours, and then cure at 50 °C for 48 hours.

**Table 1 Formula of enzyme solution**

| Component | Concentration (mg/mL) (HEPES aqueous solution) |
|---|---|
| Glucose oxidase (GOx) | 30 |
| Human serum albumin (HSA) | 30 |
| Osmium complex | 30 |
| Crosslinker PEGDGE2000 | 10 |

In Table 1, "concentration" refers to the concentration of each component in HEPES aqueous solution.

**Table 2 Coating reagent A of outer membrane solution in Application Example 1**

| Component | Concentration (mg/mL) (ethanol/HEPES mixed solution with a volume ratio of 80:20) |
|---|---|
| Poly(tetravinylpyridine-co-styrene) (PVP-co-PS) | 40 |
| Stabilizer PDMS | 30 |
| PEGDGE2000 | 10 |

**Table 3 Coating reagent B of outer membrane solution in Application Example 1**

| Component | Concentration (mg/mL) (ethanol/HEPES mixed solution with a volume ratio of 80:20) |
|---|---|
| Outer membrane material in Embodiment 2 | 30 |
| Stabilizer PDMS | 30 |
| PEGDGE2000 | 10 |

In Table 2 and Table 3, "concentration" refers to the concentration of each component in a mixed solution of ethanol and HEPES, where the volume ratio of ethanol to HEPES is 80:20.

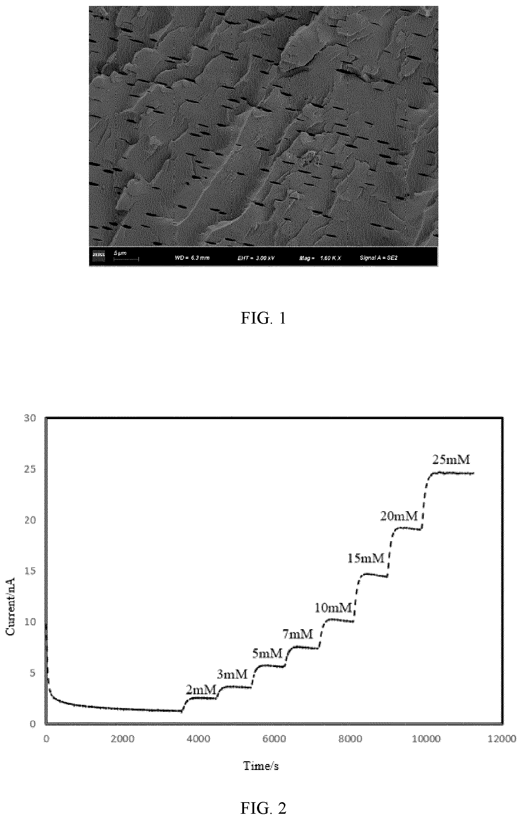

FIG. 1 is a cross-sectional SEM diagram of the coating material formed in Application Example 1. Its pore structure is manufactured during the aging process, and its pores are important channels for glucose in the interstitial fluid to enter the functional area of the biosensor.

FIG. 2 shows the time-current curve of the biosensor in Application Example 1. It can be seen from FIG. 2 that different concentrations of glucose solutions have stable current values without attenuation, making it possible to make biosensors.

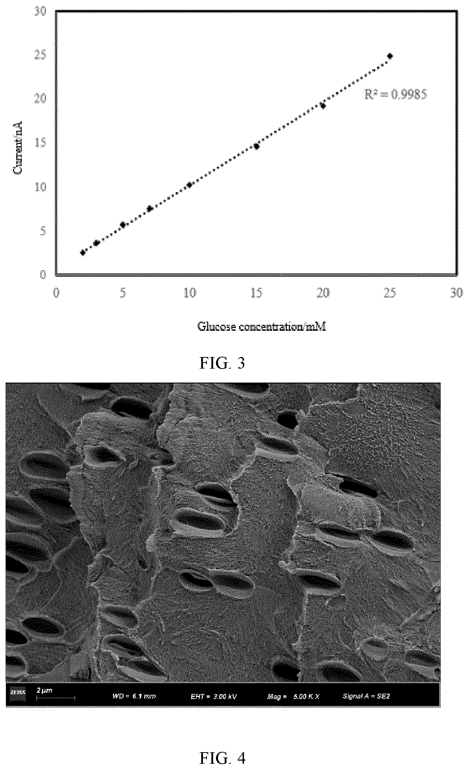

FIG. 3 shows the linear relationship between the current value of the biosensor and glucose concentration in Application Example 1. The specific testing process is as follows: in a 100Mm PBS buffer with pH=7.4, the operating voltage is set to 40mV, and different concentrations of glucose solutions (with concentrations of 2mM, 3mM, 5mM, 10mM, 15mM, 20mM, and 25mM, respectively) are added to the PBS buffer to achieve the response current of the biosensor at different sugar concentrations. The test results, as shown in FIG. 3, show a good linear relationship between different current values and different glucose concentrations, indicating a positive correlation between glucose concentration and current values. Different glucose concentrations can be inferred from different current values, indicating that the polymer of the present application can be applied in biosensors.

### Application Example 2

The biosensor is used to detect glucose in the human body at low potential. The biosensor has an active glucose oxidase.

A biosensor, with coating materials prepared using the materials and proportions listed in Tables 1, 4, and 5. The specific method is:
At room temperature, add the components in Table 4 to 4-hydroxyethylpiperazine ethane sulfonic acid aqueous solution and ethanol solution, stir and dissolve. After dissolution, continue to add the low molecular weight polymer PDMS and crosslinker PEGDGE2000 in Table 4. After ultrasonic dissolution, obtain coating reagent A for the outer membrane solution;
Similarly, follow the above steps, and prepare the coating reagent B for the outer membrane solution according to the raw materials and their ratios in Table 5;
Apply the responsive enzyme and mediator coating reagents configured according to the formula in Table 1 to the surface of the biosensor working electrode by depositing one straight line (approximately 1.5mm long). After the active area is cured, the coating reagent of the outer membrane solution in Tables 4 and 5 is impregnated multiple times to coat the active area on the biosensor. The coating method is as follows: the first step is to complete 2-3 impregnation coatings according to the coating reagent A of the outer membrane solution in Table 4, and cure at 25 °C for 30 minutes. The second step is to complete 4-6 impregnation coatings according to the coating reagent B of the outer membrane solution in Table 5, cure at 25 °C for 24 hours, and then cure at 50 °C for 48 hours.

**Table 4 Coating reagent A of outer membrane solution in Application Example 2**

| Component | Concentration (mg/mL) (ethanol/HEPES mixed solution with a volume ratio of 80:20) |
|---|---|
| Outer membrane material in Embodiment 2 | 20 |
| PDMS | 30 |
| PEGDGE2000 | 10 |

**Table 5 Coating reagent B of outer membrane solution in Application Example 2**

| Component | Concentration (mg/mL) (ethanol/HEPES mixed solution with a volume ratio of 80:20) |
|---|---|
| Outer membrane material in Embodiment 7 | 40 |
| PDMS | 30 |
| PEGDGE2000 | 10 |

FIG. 4 is a cross-sectional SEM diagram of the coating material formed in Application Example 2. Its pore structure is manufactured during the aging process, and its pores are just important channels for glucose in the interstitial fluid to enter the functional area of the biosensor.

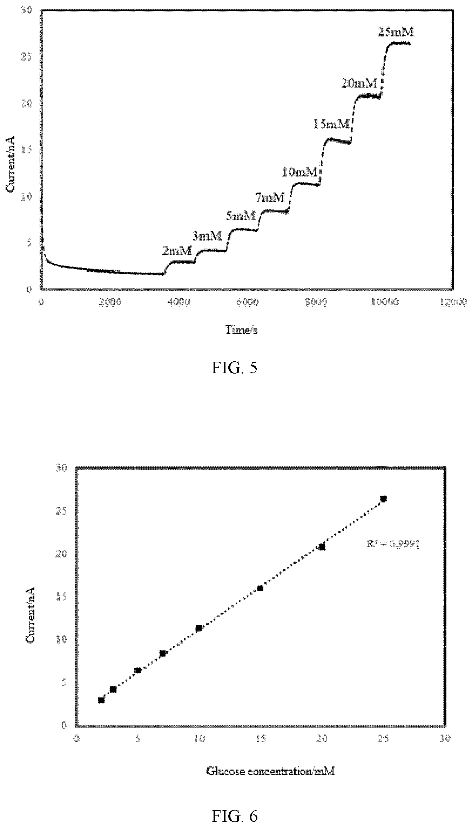

FIG. 5 shows the time-current curve of the biosensor in Application Example 2. It can be seen from FIG. 5 that different concentrations of glucose solutions have stable current values without attenuation.

FIG. 6 shows the linear relationship between the current value of the biosensor and glucose concentration in Application Example 2. The specific testing process is as follows: in a 100Mm PBS buffer with pH=7.4, the operating voltage is set to 40mV, and different concentrations of glucose solutions (with concentrations of 2mM, 3mM, 5mM, 10mM, 15mM, 20mM, and 25mM, respectively) are added to the PBS buffer to achieve the response current of the biosensor at different sugar concentrations. The test results, as shown in FIG. 6, show a good linear relationship between different current values and different glucose concentrations, indicating a positive correlation between glucose concentration and current values. Different glucose concentrations can be inferred from different current values, therefore, the polymer of the present application can be applied in biosensors.

### Application Example 3

The preparation of biosensors for detecting lactic acid is similar to that of corresponding glucose responsive analyte sensors, except for replacing glucose oxidase with lactate responsive enzyme. The lactate responsive enzyme may be lactate oxidase.

A biosensor, with coating materials prepared using the materials and proportions listed in Tables 6, 4, and 5.

Deposit the responsive enzyme and mediator coating reagents configured according to the formula in Table 6 on the surface of the working electrode to form a dotted linear area with an area of approximately 0.15mm². The coating reagents A and B for the outer membrane solution, as well as the coating method, are the same as those in Application Example 2.

**Table 6 Formula of enzyme solution**

| Component | Concentration (mg/mL) In 10mM MES buffer, pH=6.0 |
|---|---|
| Lactate oxidase | 30 |
| HSA | 30 |
| Osmium complex | 20 |
| PEGDGE2000 | 15 |

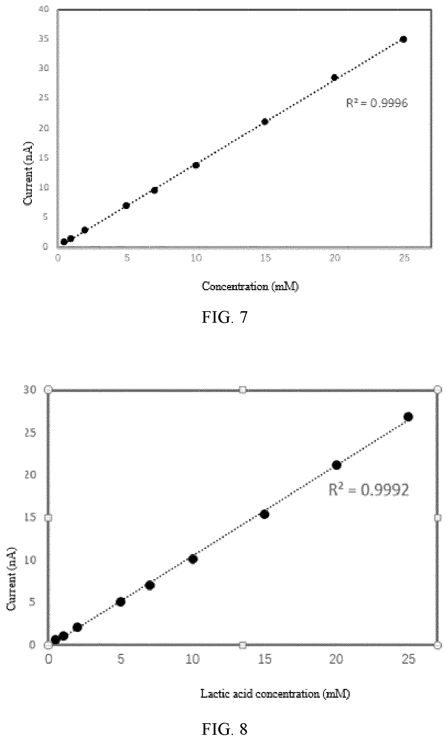

FIG. 7 shows the current response values of the biosensor in Application Example 3 at different lactic acid concentrations (2mM, 3mM, 5mM, 7mM, 10mM, 15mM, 20mM, and 25mM, respectively). The specific testing process is as follows: the operating voltage is set to 40mV, and the test is conducted in 100mM PBS buffer at 37 °C. Different concentrations of lactic acid solutions are added to the PBS buffer to obtain the response current of the sensor at different concentrations, which has a good linear relationship. The test results, as shown in FIG. 7, show a good linear relationship between different current values and different lactic acid concentrations, indicating a positive correlation between lactic acid concentration and current values. Different lactic acid concentrations can be inferred from different current values, indicating that the polymer of the present application can be applied in biosensors.

### Application Example 4

The preparation of biosensors for detecting lactic acid is similar to that of corresponding glucose responsive analyte sensors, except for replacing glucose oxidase with lactate responsive enzyme. The lactate responsive enzyme is lactate dehydrogenase.

A biosensor, with coating materials prepared using the materials and proportions listed in Tables 7, 4, and 5.

Deposit the responsive enzyme and mediator coating reagents configured according to the formula in Table 7 on the surface of the working electrode to form a square area with an area of approximately 0.15mm². The coating reagents A and B for the outer membrane solution, as well as the coating method, are the same as those in Application Example 2.

**Table 7 Formula of enzyme solution**

| Component | Concentration (mg/mL) In 10mM MES buffer, pH=6.0 |
|---|---|
| Lactate dehydrogenase | 20 |
| NAD | 20 |
| HSA | 20 |
| Osmium complex | 15 |
| PEGDGE2000 | 10 |

FIG. 8 shows the current response values of the biosensor in Application Example 4 at different lactic acid concentrations (2mM, 3mM, 5mM, 7mM, 10mM, 15mM, 20mM, and 25mM, respectively). The operating voltage is set to 40mV, and the test is conducted in 100mM PBS buffer at 37 °C. Different concentrations of lactic acid solutions are added to the PBS buffer to obtain the response current of the sensor at different concentrations, which has a good linear relationship.

### Comparative Application Example 1:

The biosensor is used to detect glucose in the human body at low potential. The biosensor has an active glucose oxidase. The proportion of the formulations specified in Table 1 are used for proportioning.

A biosensor, with coating materials prepared using the materials and proportions listed in Tables 1 and 8 below, wherein the specific method is as follows:
At room temperature, add the components in Table 8 to 4-hydroxyethylpiperazine ethane sulfonic acid aqueous solution and ethanol solution (with a volume ratio of 5:95), stir and dissolve. After dissolution, continue to add the crosslinker. After ultrasonic dissolution, obtain a coating reagent for the outer membrane solution.

Deposit the responsive enzyme and mediator coating reagents configured according to the formula in Table 1 on the surface of the biosensor electrode into a dot of approximately 0.02mm², and apply to the surface of the biosensor working electrode. After curing in the active area, the active area on the biosensor is coated with the coating reagent of the outer membrane solution as shown in Table 8 through multiple impregnations. After the impregnation coating is completed, the biosensor is cured at 25 °C and then at 50 °C for 48 hours.

**Table 8 Coating reagent of outer membrane solution**

| Component | Concentration (mg/mL) (ethanol/HEPES mixed solution with a volume ratio of 95:5) |
|---|---|
| Poly(tetravinylpyridine-co-styrene) | 30 |
| PEGDGE2000 | 10 |

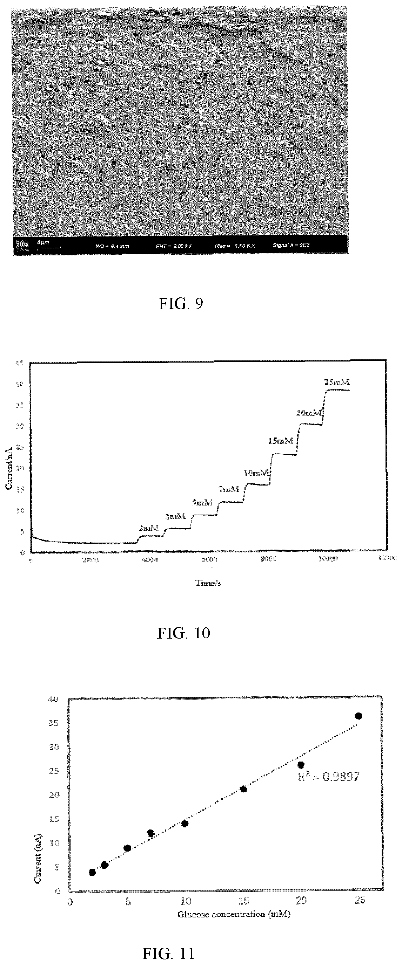

FIG. 9 is a cross-sectional SEM diagram of the outer membrane solution formed in Comparative Application Example 1. Its pore structure is manufactured during the aging process, and its pores are just important channels for glucose in the interstitial fluid to enter the functional area of the biosensor.

FIG. 10 shows the time-current curve of the biosensor in Comparative Application Example 1. The sensor is made of poly (tetravinylpyridine-co-styrene) crosslinked with a crosslinker and uniformly coated on the surface of the biosensor. In a 100Mm PBS buffer with pH=7.4, the operating voltage is set to 40m V, and different concentrations of glucose solutions are added to the PBS buffer to achieve the response current of the biosensor at different sugar concentrations.

FIG. 11 shows the linear relationship between the current value and glucose concentration in Comparative Application Example 1, wherein the dashed line represents the simulated linear relationship and the solid line represents the linear relationship of the measured values; it can be found from comparison between the linear relationship between current values and glucose concentrations in Application Example 1 (FIG. 3) and Comparative Application Example 1 that, Comparative Application Example 1 shows a better linear relationship. When this material with good linear relationship is applied to the outer membrane of the biosensor, the measured data will be more accurate, which can reflect the better performance of the product.

The above provides an exemplary explanation of the embodiment of the present application. However, the scope of protection of the present application is not limited to the above-mentioned embodiments. All alterations, equivalent replacements and improvements, etc. made by those skilled in the art without departing from the spirit and principle of the present application shall be included in the scope of the present application.

## Claims

1. A polymer, **characterized in that**, the polymer comprises three or more of the following structural units:
wherein the polymer comprises at least one of structural units of the compounds shown in general formula I, 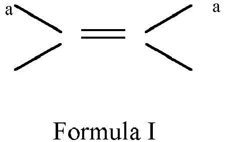
in formula I, Rₐ, R_{b}, and R_{c} are the same or different, independently selected from H, C₁₋₆ alkyl, sulfonic substituents, ether substituents, or ester substituents;
R_{d} is a substituted or unsubstituted imidazole ring or pyridine ring; the substituted or unsubstituted refers to the presence or absence of a substituent on a carbon atom of the imidazole ring or pyridine ring, and the substituent is selected from C₁₋₆ alkyl, C₁₋₆ alkoxy, sulfo, sulfamino, amino, methylamino, dimethylamino, ethylamino, propylamino or butylamino;
structural units of styrene compounds;
and, (methyl) acrylic compounds;
wherein the polymer can optionally comprise structures shown in formula II: 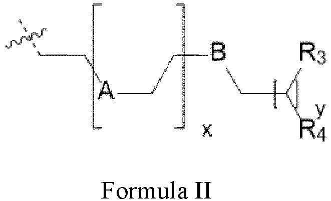
wherein, A is O, N or C; B is O, N or C;
wherein R₃ and R₄ are the same or different, independently selected from H, CH₃, OMe, SO₃²⁻, CO₂²⁻, PO₃²⁻, or NR₅R₆; R₅ and R₆ are the same or different, independently selected from H, or C₁₋₆ alkyl;
wherein x is an integer of 0-10; y is an integer of 0-10; 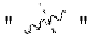
represents linker bonds with Ns on a pyridine ring or an imidazole ring.

2. The polymer according to claim 1, **characterized in that**, the monomer containing the structural units shown in formula I is selected from at least one of 4-vinylpyridine, 2-vinylpyridine and 3-vinylpyridine, 1-vinylimidazole, 2-vinylimidazole and 4-vinylimidazole;
the styrene compounds are at least one of styrene, 2-methylstyrene, 3-methylstyrene, 4-methylstyrene, o-methoxystyrene, m-methoxystyrene, p-methoxystyrene, and m-sulfonic styrene;
the (methyl) acrylic compounds are at least one of (methyl) acrylate, acrylic acid, acrylamide, propanol, ethoxyethyl methacrylate, 2- methacryroyloxyethylphosphoryl choline, and methacrylic hydroxyalkyl ester. The (methyl) acrylate can be selected from C₁₋₆ alkyl (methyl) acrylate. The methacrylic hydroxyalkyl ester is selected from C₁₋₆ hydroxyalkyl (methyl) acrylate, hydroxyethyl acrylate, hydroxyethyl methylacrylate, hydroxypropyl acrylate and hydroxypropyl methacrylate.

3. The polymer according to claim 1 or 2, **characterized in that**, the sulfonic substituents are one of methyl sulfo, ethyl sulfo, propyl sulfo, isopropyl sulfo, and butyl sulfo;
the ether substituents are one of methoxyether, ethoxyether, diphenyl oxide, benzyl oxide, methyl sulfide, or ethyl sulfide;
the ester substituents are one of C₁₋₆ alkyl esters, such as methyl methoxy, methyl ethoxy, n-propoxy methyl, methyl isopropoxy.

4. A preparation method of the polymer according to any of claims 1-3, **characterized in that**, the method comprises:
step (1): mixing at least three monomers above to react with an initiator in a solvent, in order to obtain the polymer.

5. The method according to claim 4, **characterized in that**, the method further comprises step (2): enabling the polymer obtain in the step (1) to react with the compound of the structure shown in formula III, in order to obtain a polymer containing the group shown in formula II; 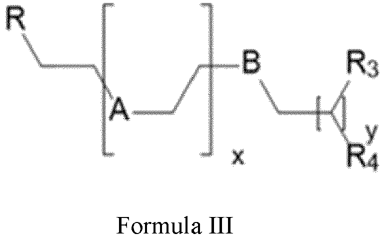 wherein, A is O, N or C; B is O, N or C;
R₃ and R₄ are the same or different, independently selected from H, CH₃, OMe, SC₃²⁻, CO₂²⁻, PO₃²⁻, or NR₅R₆; R₅ and R₆ are the same or different, independently selected from H, or C₁-C₆ alkyl;
x is an integer of 0-10; y is an integer of 0-10;
R is a detachable group.

6. The method according to claim 5, **characterized in that**, the compound of the structure shown in formula III is one of 2-(2-methoxyethoxy) halides or sulfonates or haloalkanes or halogenated carbonates, or halogenated phosphates, selected from 1,3-propane sultone, diethylene glycol mono-p-toluenesulfonate or 1-bromo-2-(2-methoxyethoxy) ethane, 1-bromo-2-(2-methoxyethoxy) methyl acetate or 1-chloro-2-(2-methoxyethoxy) trimethyl phosphate.

7. A porous polymeric membrane material, **characterized in that**, the porous polymeric membrane material contains the polymer according to any of claims 1-3.

8. A preparation method of the porous polymeric membrane material according to claim 7, **characterized in that**, the method is: mixing the polymer and a low molecular weight polymer to react in a solvent, in order to obtain the porous polymeric membrane material.
The low molecular weight polymer is selected from polyoxypropylene-polyoxyethylene block copolymer, carbomer, polyether amine, polydimethylsiloxane, polyethylene glycol diglycidyl ether, polyacrylate, hydroxypropyl methylcellulose, polyvinone, Dowsil 57 non-reactive ethylene glycol copolymer surfactant or Dowsil 205SL 50% silicone polyether copolymer.

9. A biosensor, **characterized in that**, it comprises a conductive matrix and a sensing membrane coated on a surface of the conductive matrix, wherein the sensing membrane internally comprises the porous polymeric membrane material according to claim 7 and a responsive enzyme.

10. In the biosensor according to claim 9, the steps of coating the sensing membrane on the surface of the conductive matrix comprises:
preparing a coating reagent, which includes at least the responsive enzyme, an electron transfer agent, the porous polymeric membrane material, and the crosslinker; and,
coating the coating reagent onto the surface of the conductive matrix and curing the coating reagent.
The shape of the coating reagent coated on the surface of the conductive matrix can be straight, dashed, single point, multiple point, or planar.

11. The biosensor according to claim 9 and 10 is applied in detection of glucose, lactic acid, blood ketone, uric acid and cholesterol.
